# EUROPÄISCHE PATENTSCHRIFT

(11) **EP 2 113 991 B1**
(45) Veröffentlichungstag und Bekanntmachung des Hinweises auf die Patenterteilung: **15.07.2015**
(21) Anmeldenummer: 08008369.4
(22) Anmeldetag: 02.05.2008
(51) Int. Cl.: H02K 15/12

(54) **Vergossener Stator einer dynamoelektrischen Maschine**
Cast stator of a dynamoelectric machine
Stator coulé d'une machine dynamoélectrique

(43) Veröffentlichungstag der Anmeldung: 04.11.2009
(73) Patentinhaber: Siemens Aktiengesellschaft, 80333 München (DE)
(72) Erfinder: Heim, Bruno, 97633 Grosseibstadt (DE)

(56) Entgegenhaltungen:
- WO-A-96/31936
- DE-A1- 19 915 664
- DE-B- 1 139 196
- US-A- 3 827 141

## Beschreibung

Die Erfindung betrifft ein Blechpaket eines Stators einer dynamoelektrischen Maschine mit in Nuten angeordneten Wicklungen, die an den Stirnseiten des Blechpakets Wickelköpfe ausbilden und wobei die Wickelköpfe in einer Vergussmasse eingebettet sind, ein Herstellverfahren eines derartigen Stators und eine dynamoelektrische Maschine mit einem derartigen Stator.

Blechpakete von Statoren, insbesondere kühlmantellosen Statoren dynamoelektrischer Maschinen, werden bisher über am Außendurchmesser des Blechpakets befindlichen Klammernuten durch eine Vergussmasse z.B. Harz vorzugsweise im Vakuumverguss vergossen. Nachteilig dabei ist, dass die am Außendurchmesser befindlichen mit Harz befüllten Aussparungen bei einem kühlmantellosen Stator am Außendurchmesser sichtbar sind und das Harz ausbrechen kann. Dies geschieht insbesondere durch eine spanenden Nachbearbeitung, wobei die harzbefüllten Aussparungen zu unterbrochenen Schnitten führen und demnach vergleichsweise hohe Oberflächenrauhigkeiten verursachen.

Außerdem hat die hohe Abrasivität der z.B. mit Quarzmehl gefüllten Vergussmasse einen hohen Verschleiß der Bearbeitungswerkzeuge, wie z.B. Drehmeißel zur Folge. Der abrasive Verschleiß stellt dabei eine Zerspanung im Mikrobereich dar.

Aus arbeitstechnischer Sicht darf aufgrund der lungengängigen Stäube der Füllstoffe in der Vergussmasse, die beispielsweise bei der Zerspanung entstehen, der Verguss nur nass bearbeitet werden. Bei einer Trockenbearbeitung muss der entstehende Staub abgesaugt werden. Dies führt letztlich zu einem erhöhten Bearbeitungsaufwand.

**Aus der** WO 96/31936 A **ist ein Blechpaket eines Stators einer dynamoelektrischen Maschine mit Wicklungen bekannt, wobei an den Stirnseiten des Blechpakets Wickelköpfe ausgebildet sind, die in einer Vergussmasse, insbesondere Harz, eingebettet sind, wobei das Blechpaket an seinem radial äußeren Bereich zumindest eine axial verlaufende Ausnehmung aufweist, mit einer in Umfangsrichtung geschlossenen Kontur.**

Ausgehend davon liegt der Erfindung die Aufgabe zugrunde, ein Blechpaket eines Stators einer dynamoelektrischen Maschine zu schaffen, der eine einfache und gefahrlose Nachbearbeitung gestattet bei gleichzeitiger Gewährleistung eines fehlerfreien, homogenen Vergusses, insbesondere ohne Einschlüsse.

Des Weiteren soll eine ausreichende Kühlung eines derartigen Stators geschaffen werden.

**Die Lösung der gestellten Aufgaben gelingt durch ein Blechpaket nach Anspruch 1.**

**Die Lösung der gestellten Aufgabe gelingt ebenfalls durch ein Blechpaket nach Anspruch 2.**

**Die Lösung der gestellten Aufgabe gelingt ebenso durch eine dynamoelektrische Maschine nach Anspruch 8.**

**Und die Lösung der gestellten Aufgabe gelingt ebenfalls durch ein Verfahren zur Herstellung eines Blechpakets nach Anspruch 13.**

Durch die nunmehr nach außen zum Außendurchmesser hin geschlossene Ausnehmung entsteht im radial äußeren Bereich, d.h. in einem vom Luftspalt abgewandten Bereich des Statorblechpakets der dynamoelektrischen Maschine ein oder mehrere, am äußeren Rand des Statorblechpakets verteilte axial verlaufende Ausnehmungen oder Kanäle, die insbesondere beim Vergießen kühlmantelloser Statoren als Füllkanal dienen.

Das Querschnittsprofil eines Kanals ist dabei in weiten Grenzen variabel. Um jedoch den magnetischen Fluss im Betrieb der dynamoelektrischen Maschine am wenigsten zu beeinflussen, wird die Kontur dieser Ausnehmung flach oder schalenförmig gewählt, so dass sie sich vorteilhafterweise der Außenkontur des Blechpakets anschmiegt.

Außerdem weist das Blechpaket nun erfindungsgemäß eine geschlossene Außenkontur auf, die mit vergleichsweise höherer Fertigungsgenauigkeit spanend bearbeitet werden kann, als die Bearbeitungsqualität bei einem außen liegenden Füllkanal und damit bei folglich unterbrochenem Schnitt.

Damit wird eine unnötige Abrasivität der das Blechpaket bearbeitenden Werkzeuge vermieden. Des Weiteren treten bei der Bearbeitung keine gesundheitsschädlichen Stäube auf, die durch aufwändige Bearbeitungsmaßnahmen vermieden werden müssen, z.B. Nassbearbeitung.

Der nunmehr vergussoptimierte Blechschnitt ist somit auch für die spanende Verarbeitung von vergossenen Statoren geeignet. Da nunmehr die mit Vergussmasse, z.B. Harz gefüllten äußeren Kanäle nicht mehr spanend bearbeitet werden, sondern nur noch die Mantelfläche des Stators, sind längere Werkzeugstandzeiten der Bearbeitungswerkzeuge die Folge und es ist damit eine vergleichsweise glatte Oberfläche des Statorblechpakets geschaffen.

Damit reduziert sich die Oberflächenrauhigkeit und der vergossene Stator ist damit vergleichsweise einfach in einen vorgesehenen Einbauraum, beispielsweise einer Werkzeugmaschine, oder ein Gehäuse oder Kühlmantel einzusetzen, insbesondere einzuschieben.

Der erfindungsgemäße Aufbau des Blechpakets weist auch für den Endabnehmer der dynamoelektrischen Maschine einen höheren Nutzen auf, da kein Harz auf der Oberfläche des Stators verbleibt und folglich auch später nicht ausbrechen kann. Ausbrechendes Harz kann damit nicht mehr in den jeweiligen Fertigungsprozess gelangen und dort Betriebsstörungen verursachen.

In weiteren Ausgestaltungen der vergossenen Statoren, bei denen im Wickelkopfbereich Kappen oder Stahlringe als verlorene Vergussform aufgebracht werden, ist an dem Blechpaket beidseitig ein Zentrierrand angebracht. Diese Kappen bzw. Stahlringe werden auf diesem Zentrierrand aufgeschrumpft, um eine besonders vorteilhafte Abdichtung, insbesondere während des Vergussprozesses zu erhalten. Dabei dient der äußere Steg von Kappe oder Stahlring als Dichtkante gegen auslaufende Vergussmasse.

Die Erfindung sowie weitere vorteilhafte Ausgestaltungen der Erfindung sind den prinzipiell dargestellten Zeichnungen zu entnehmen. Dabei zeigen:
- FIG 1: in perspektivischer Darstellung ein Blechpaket,
- FIG 2: eine Querschnittsdarstellung des Blechpakets,
- FIG 3: eine Detaildarstellung,
- FIG 4: eine schematische Darstellung des Harzflusses bei einem Stator,
- FIG 5: Detaildarstellung einer Nut,
- FIG 6: elektrische Maschine mit Kappen,
- FIG 7: Kappe in Seitenansicht,
- FIG 8-10: Ausführungen der Kappe.

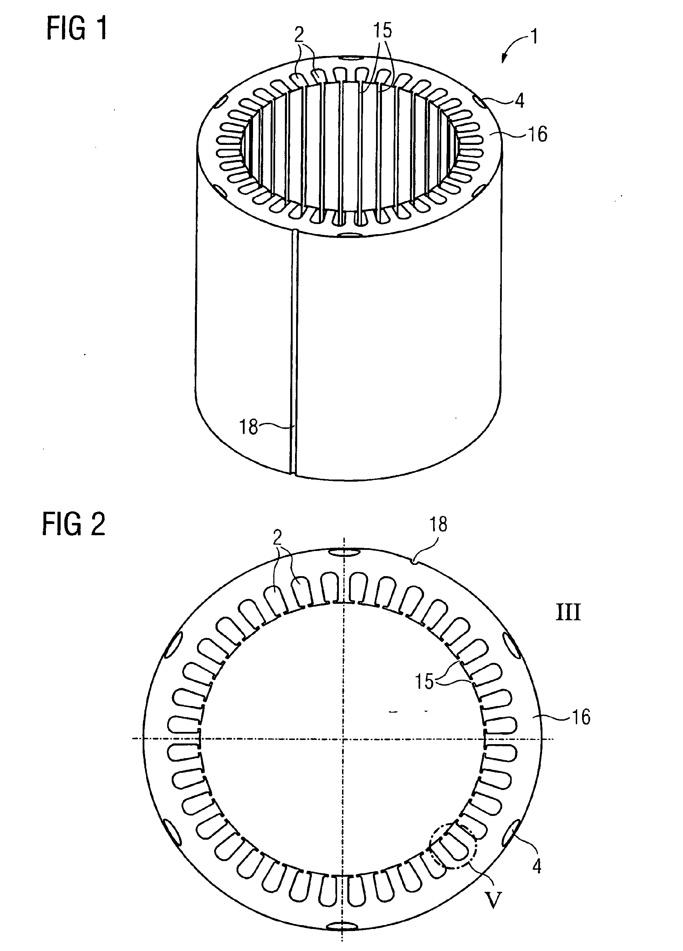

FIG 1 zeigt in perspektivischer Darstellung ein Blechpaket 16 eines Stators 1, das aus axial hintereinander angeordneten Einzelblechen gemäß FIG 2 aufgebaut ist. Der Stator 1 weist axial verlaufende Nuten 2 auf, in die später, in dieser Darstellung nicht näher dargestellt, Wicklungen 3 eingesetzt werden, wobei die Wicklungen 3 als Zahnspulenwicklungen oder gesehnte Wicklungen ausgeführt sein können. Diese Wicklungen 3 werden dabei über den Nutschlitz 15 in die Nuten 2 geträufelt oder durch geeignete Vorrichtungen, z.B. einen Flyer eingezogen. Die Wicklungen 3 bilden dabei an den Stirnseiten 10 des Blechpakets 16 Wickelköpfe 5 aus.

Am radial äußeren Bereich des Blechpakets 16 sind erfindungsgemäß axial verlaufende Ausnehmungen 4 vorgesehen, die jeweils eine geschlossene Kontur aufweisen.

Der Längsschlitz 18 bildet dabei mit nicht näher dargestellten korrespondierenden Mittel von Gehäuse, Einbauraum oder Kühlmantel eine Drehmomentstütze.

Um auch bei Statoren 1 mit Nutschrägung den erfindungsgemäßen Gedanken vorteilhaft einsetzen zu können, sind die Einzelbleche so gestanzt, dass sich zwar über die axiale Länge des Stators 1 eine Nutschrägung von ca. ein oder zwei Nutteilungen einstellt, jedoch die Ausnehmungen 4 vorzugsweise weiterhin axial, d.h. ohne Versatz in Umfangsrichtung angeordnet sind. Dies vereinfacht den Gießvorgang, d.h. der Strömungswiderstand in den axial verlaufenden Ausnehmungen 4 ist dementsprechend verringert, was insbesondere bei größerer Viskosität der Vergussmasse von Vorteil ist.

Eine Nutteilung ist dabei der Abstand zweier benachbarter Nuten 2 in Umfangsrichtung.

Selbstverständlich lässt sich der Vorgang des Vergießens des Stators 1 aber auch bei Nutschrägung und gleichzeitiger Schrägung der Ausnehmungen 4 durchführen. Es muss sich letztlich nur ein Kanal in im wesentlich axialer Richtung ergeben, der die Vergussmasse auf die andere Seite des Blechpakets 16 führt.

FIG 2 zeigt einen Querschnitt eines Einzelblechs des Blechpakets 16, mit den Ausnehmungen 4 und den Nuten 2. Die Anzahl der Ausnehmungen 4 ist hier beispielhaft mit sechs angegeben, wobei je nach Maschinengröße oder nach Volumen und/oder Viskosität der einzubringenden Vergussmasse diese Anzahl vor dem Stanzvorgang des Blechpakets 16 festgelegt und damit auch erhöht oder erniedrigt werden kann.

Das über die Ausnehmungen 4 einzubringende Volumen der Vergussmasse hängt ab u.a. von der Ausladung des Wickelkopfes 5 und/oder der Anzahl der zu füllenden Nuten 2. Des Weiteren beeinflusst die temperaturabhängige Viskosität der Vergussmasse, z.B. des Harzes die Querschnittsfläche der Ausnehmungen 4 und die Wirksamkeit der Kapillarkräfte.

Dabei ist die Viskosität ein Maß für die Zähflüssigkeit eines Fluids, in diesem Fall des Harzes. Je größer die Viskosität, desto dickflüssiger, also weniger fließfähig ist das Fluid.

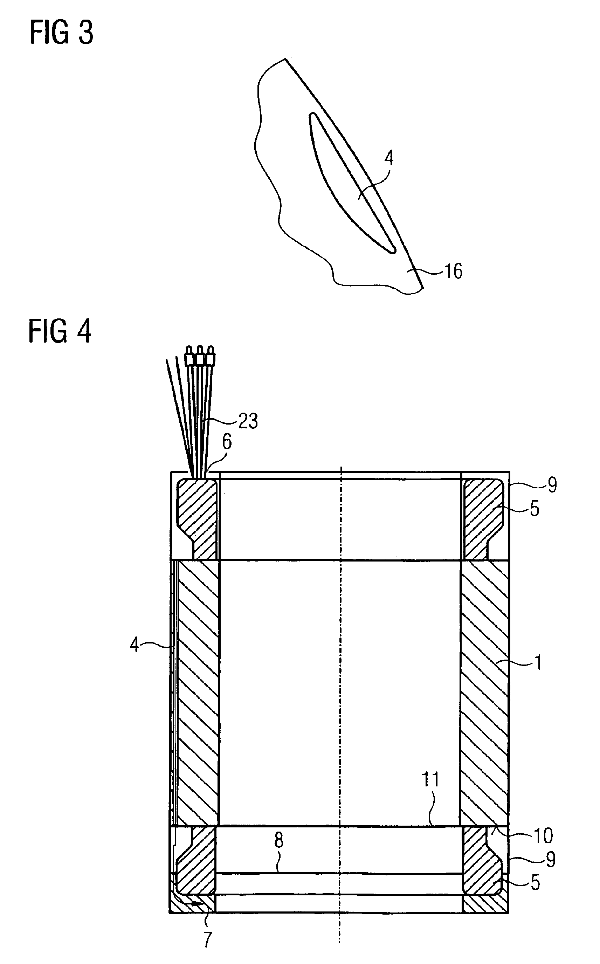

FIG 3 zeigt in einer Detaildarstellung eine beispielhafte Kontur einer Ausnehmung 4, die eine radial geringere Ausdehnung im Verhältnis zu ihrer Ausdehnung in Umfangsrichtung aufweist. Dies hat den Vorteil, dass der Verlauf des von den Wicklungen 3 erzeugten Magnetflusses im Blech 16 im Betrieb der dynamoelektrischen Maschine nicht durch eine unverhältnismäßige große radiale Ausdehnung der Ausnehmung 4 gestört , bzw. beeinträchtigt wird.

Vorteilhaft ist dabei unabhängig von der geometrischen Ausgestaltung der Kontur (Ellipse, erbsenförmige Kontur, sichelförmige Kontur etc.) ein "Verhältnis Ausdehnung in Umfangsrichtung zu Ausdehnung in radialer Richtung" von größer gleich zwei.

FIG 4 zeigt einen Stator 1, der mit Wicklungen 3 versehen ist, wobei die Wicklungen 3 an der Stirnseite 10 des Blechpakets 16 Wickelköpfe 5 ausbilden, die für den Betrieb der dynamoelektrischen Maschine zu vergießen sind, um eine Isolation innerhalb der Wicklung 3 und/oder eine Wärmeabfuhr u.a. aus dem Wickelkopf 5 zu erhalten.

Aus diesem Grund wird das mit Wicklungen 3 versehene, auf ca. 90 Grad Celsius vorgeheizte Blechpaket 16, das beispielsweise aus einem Paket aus Backlackblechen besteht, in eine für den Maschinentyp geeignete Hilfsform 9 eingesetzt, und über wenigstens einen Einlass 6 über die Ausnehmungen 4 mit Harz unter atmosphärischem Druck oder Überdruck gefüllt. Das ebenfalls auf ca. 90 Grad aufgeheizte Harz fließt aufgrund der Schwerkraft und/oder Drucks und optional unter Einsatz des bekannten Prinzips des Vakuumvergusses durch die axiale Ausnehmung 4 und tritt am unteren Ende der Hilfsform 9 in den Bereich des unten liegenden Wickelkopfes 5 ein. Durch weitere Zugabe von flüssigem Harz steigt der Harzpegel 8 bis er zunächst die Unterkante 11 des Blechpakets 16 erreicht. Damit ist dann der Wickelkopf 5 an dieser Seite des Blechpakets 16 komplett von Harz ausgefüllt bzw. umgeben.

Ab der Unterkante 11 wird das Harz im Wesentlichen durch Kapillarkräfte weiter nach "oben" gezogen. Diese Kapillarwirkung stellt sich u.a. zwischen den in den Nuten 2 befindlichen Wickeldrähten, insbesondere Kupferdrähten ein. Damit sind auch die Nuten 2 mit Harz ausgegossen. Die weitere Zugabe von Harz bewirkt einen Verguss des auf der anderen Seite des Blechpakets 16 befindlichen Wickelkopfes 5.

Um auch nur das Blechpaket 16 des Stators 1 zu vergießen, wird der Bereich der Statorbohrung des Blechpakets 16 durch einen im Wesentlichen nicht näher dargestellten zylinderförmigen Stempel eingenommen. Damit wird insbesondere im Bereich der Nuten 2 ein homogener, einschlussarmer Verguss gewährleistet.

Aus der Hilfsform 9, aus einem Einlass 6 oder einer weiteren speziellen Öffnung ragen die Anschlüsse 23 der Wicklungen 3. Die Anschlüsse 23 stellen dabei die Leistungsanschlüsse beispielsweise an einen Umrichter und/oder Leitungen von Sensoren aus dem Stator 1, wie z.B. Temperatursensoren.

Der gesamte, mit Harz vergossene Verbund, also Blechpaket 16, Ausnehmungen 4, in den Nuten 2 befindliche Zwischenräume, Wickelköpfe 5 wird anschließend in einem Ofen bei ca. 80 bis 100 Grad Celsius ausgehärtet.

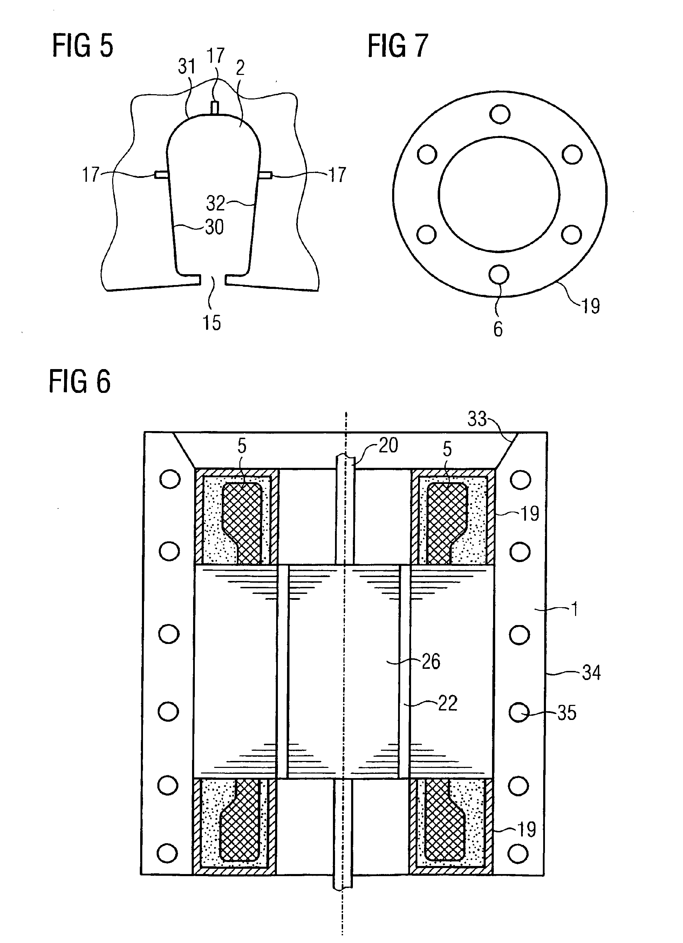

FIG 5 zeigt in einer Detaildarstellung eine Nut 2 mit Rinnen 17, die aus Gründen der Übersichtlichkeit ohne Wicklung 3 und ohne Nutisolation 21 dargestellt wurde. Die Nut 2 weist in diesem Ausführungsbeispiel beispielhaft drei Rinnen 17 auf, die in axialer Richtung des Blechpakets 16 verlaufen und ergänzend zu den Kapillarkräften der Verteilung des Harzes in der Nut 2 dienen. Die Anzahl der Rinnen 17 pro Nut 2 kann geringer oder größer als drei sein.

Ebenso ist auch ein wellenförmiger Verlauf einer oder mehrere Rinnen 17 an den Nutwänden 30, 32 vorstellbar. Damit würde beispielsweise eine Rinne 17 über ihren axialen Verlauf betrachtet von der linken Nutwand 30, über den Nutgrund 31 zur rechten Nutwand 32 verlaufen. Es sind aber auch nur wellenförmige Verlaufe einer Rinne 17 innerhalb einer Nutwand 30, 32 oder des Nutgrundes 31 vorstellbar. Bei mehreren Rinnen 17 pro Nut 2 und unterschiedlichen Wellenverläufen treten ggf. Überschneidungen der Rinnen 17 an den Nutwänden 30, 32 bzw. am Nutgrund 31 auf.

Die Rinnen 17 werden durch den Stanzvorgang des Bleches hergestellt, wobei bei der Stapelung des Blechpakets 16 gewährleistet ist, dass nicht nur die Ausnehmungen 4 sondern auch, sofern vorhanden, die Rinnen 17 einen Harzdurchfluss entgegen der Fließrichtung des Harzes in den Ausnehmungen 4 bei der Herstellung des Stators 1 gestatten.

FIG 6 zeigt eine prinzipiell dargestellte dynamoelektrische Maschine, die eine Welle 20 antreibt und einen Rotor 26 und einen Stator 1 aufweist. Der Rotor 26 ist beispielsweise als Reluktanzläufer, als Läufer mit Permanentmagneten oder als elektrisch erregter Läufer ausgeführt. Die Wicklung 3 des Stators 1 ist dabei nur prinzipiell dargestellt, wie auch der unverhältnismäßig große Abstand der Wicklung 3 bzw. des Wickelkopfes 5 zum Luftspalt 22 der dynamoelektrischen Maschine zeigt.

Die Wickelköpfe 5 sind von Harz umgeben, das außer der elektrischen Isolation auch einen Wärmetransport nach außen, hier insbesondere zu der ringförmigen Kappe 19 bewirkt. Diese Kappe 19 führt die Wärme von den Wärmequellen der dynamoelektrischen Maschine, wie z.B. Wickelkopf 5, Blechpaket 16, Luftspalt 22 zu einer Wärmesenke, die radial außerhalb der Stators 1 angeordnet ist und als Gehäuse und/oder Kühlmantel 34 ausgeführt ist.

Diese Kappen 19 können alternativ auch nachträglich auf die mit Harz versehenen Wickelköpfe 5 aufgesetzt werden und vorteilhafterweise zur besseren Wärmeleitfähigkeit mit Wärmeleitpaste versehen werden.

Vorteilhafterweise stellen diese Kappen 19 aber gleichzeitig eine Gießform dar, die vor dem Gießvorgang an den Stirnseiten des Blechpakets 16 positioniert werden und anschließend u.a. über die Ausnehmungen 4 ausgegossen werden. Somit sind die Kappen 19 eine verlorene Gießform, die neben der vereinfachten Herstellung des Stators 1 auch im Betrieb der dynamoelektrischen Maschine die Kühlung unterstützende Eigenschaften einbringt. Dies ist insbesondere bei Kappen 19 aus gut wärmeleitfähigem Material der Fall, wie z.B. Kupfer, Aluminium etc.

Die Kappen 19 weisen gemäß FIG 7 zumindest auf einer Seite des Blechpakets 16 Einlässe 6 auf, über die die Vergussmasse, beispielsweise das Harz eingebracht wird. Aus einer speziellen Öffnung oder einem Einlass 6 werden die Anschlüsse 23 der Wicklungen 3 vor dem Vergussprozess herausgeführt.

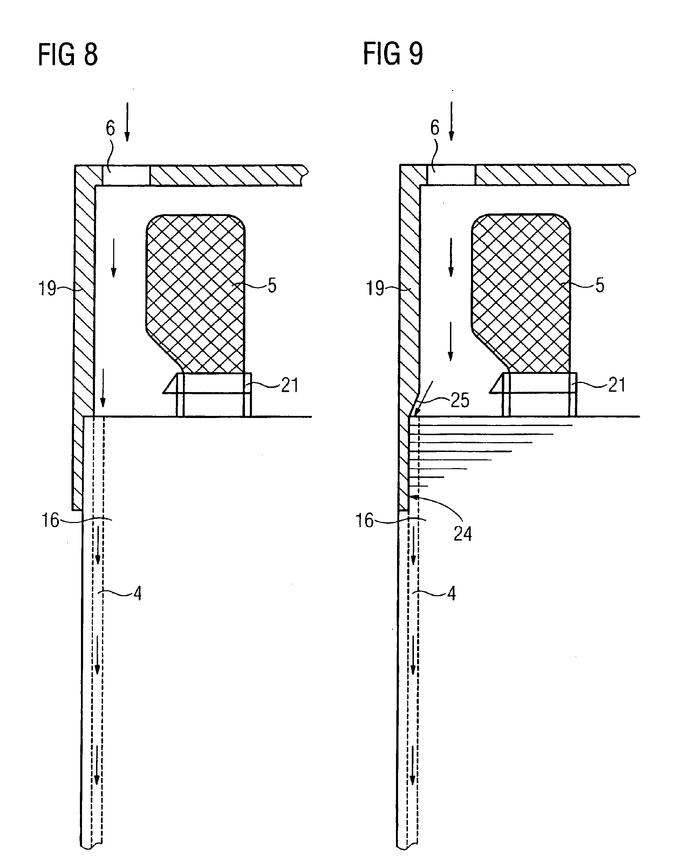

FIG 8 und FIG 9 zeigen prinzipiell, wie eine wieder verwendbare Hilfsform 9 oder die an dem Stator 1 verbleibende Kappe 19 an dem Blechpaket 16 positioniert ist. Dies geschieht entweder dadurch, dass die Hilfsform 9 oder die Kappe 19 auf den Außendurchmesser des Blechpakets 16 aufgepresst wird, oder auf einen am Blechpaket 16 abgedrehten Bund 24 gepresst wird. In dem letztgenannten Fall ist eine Fase 25 oder eine Ausfräsung der Kappe 19 im Bereich der Ausnehmung 4 vorgesehen, um dem Harz möglichst wenig Strömungswiderstand bei seinem Weg in die Ausnehmung 4 entgegenzusetzen.

Idealerweise befinden sich die Einlässe 6 sowohl von einer Hilfsform 9 als auch einer Kappe 19 in axialer Verlängerung der Ausnehmungen 4 um der Vergussmasse einen möglichst ungehinderten Zugang zu der jeweils korrespondierenden Ausnehmung 4 zu verschaffen.

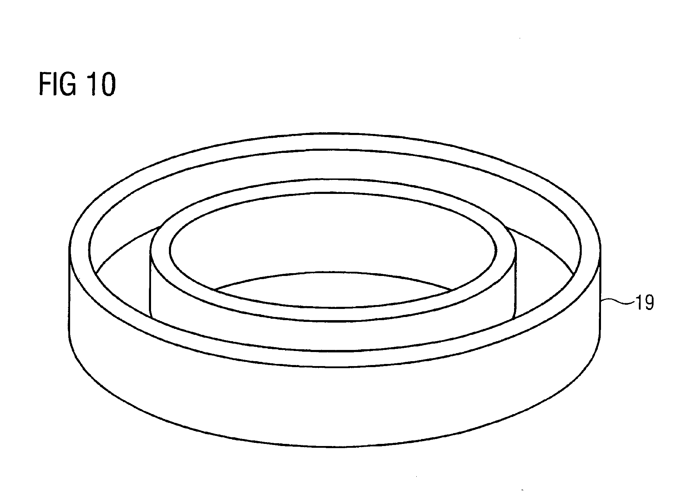

Die Kappe 19 bildet gemäß FIG 10 eine ringförmige Rinne, in der sich nach Fertigstellung der dynamoelektrischen Maschine der Wickelkopf 5 befindet. Die Enden dieser Rinne liegen dabei gemäß FIG 6 jeweils am Blechpaket 16 an, um damit zum einen während des Vergießens eine Abdichtung zu gewährleisten, als auch im Betrieb der dynamoelektrischen Maschine eine Wärmetransport aus dem Blechpaket 16 herzustellen.

Vorteilhafterweise liegt die Kappe 19 auf der dem Luftspalt zugewandten Seite nur abschnittsweise oder gar nicht am Blechpaket an. Es befindet sich somit dort nur ein abschnittsweise Anlage an das Blechpaket 16 oder ein umlaufender Spalt. Damit werden Wirbelströme vermieden, die sich sonst aufgrund des geschlossen Kreises - Blechpaket 16, Kappe 19, Blechpaket 16 - auf einer Stirnseite des Blechpakets 16 des ergeben könnten. Da in diesem Bereich der Druck der Vergussmasse vergleichsweise gering ist, sind auch geringere Anforderungen an die Abdichtung zu stellen.

Sofern aber der Spalt abgedichtet werden muss, kann vorteilhafterweise auch ein schmaler Ring aus Isolationsmaterial die Kappe 19 in diesem Bereich ergänzen, so dass wieder eine komplett geschlossene Rinne vorliegt.

Das Harz umgibt somit nach dem Vergussvorgang die Wickelköpfe 5, füllt die Ausnehmungen 4, und befindet sich in den Nuten 2 zwischen den Wicklungsdrähten, als auch sofern vorhanden zwischen der Nutisolation 21 und den Nutwänden 30, 32 bzw. dem Nutgrund 31.

Die Nutisolation 21 ragt dabei zumindest über das eine stirnseitige Ende des Blechpakets 16 an dem sich die Einlässe 6 befinden.

Die Erfindung eignet sich für kühlmantellose vergossene Einbauspindeln, da durch den Wickelkopfverguss auch gleichzeitig die Wärmeabfuhr aus den Wickelköpfen 5 gesteigert wird.

Die Erfindung eignet sich ebenso für dynamoelektrische Maschinen, die einen Kühlmantel 34 und/oder ein Gehäuse aufweisen, und den Stator 1 an der äußeren Mantelfläche gemäß FIG 6 umgeben.

Um den Stator 1 und dabei die dynamoelektrische Maschine besonders vorteilhaft in einen dafür vorgesehenen Einbauraum einer Produktionsmaschine, in ein Gehäuse und/oder in einen Kühlmantel 34 einzusetzen ist es besonders vorteilhaft, wenn der Stator 1 als Hohlzylinder insbesondere mit einem ebenen Außen- und/oder Innenmantel ausgeführt ist.

Der Kühlmantel 34 weist beispielhaft zumindest einen spiralförmig um den Stator 1 verlaufenden Kühlkanal 35 auf.

Der Einbau des Stators 1 in seinen Einbauraum wird dadurch erleichtert, dass der Einbauraum oder das Gehäuse bzw. der Kühlmantel 34 einen erweiterten Querschnitt 33 gemäß FIG 6 vorsieht.

## Patentansprüche

1. Blechpaket (16) eines Stators (1) einer dynamoelektrischen Maschine mit in Nuten (2) angeordneten Wicklungen (3), die an den Stirnseiten (10) des Blechpakets (16) Wickelköpfe (5) ausbilden, die in einer Vergussmasse, insbesondere Harz eingebettet sind, wobei das Blechpaket (16) an seinem radial äußeren Bereich zumindest eine axial verlaufende Ausnehmung (4) aufweist, über die Vergussmasse eingebracht ist und die eine in Umfangsrichtung geschlossene Kontur aufweist, wobei die Ausnehmungen (4) flach ausgeführt sind, derart, dass das Verhältnis Ausdehnung in Umfangsrichtung zu Ausdehnung in radialer Richtung größer zwei ist, wobei die Wickelköpfe (5) von einer Kappe (19) umgeben sind.

2. Blechpaket (16) eines Stators (1) einer dynamoelektrischen Maschine mit in Nuten (2) angeordneten Wicklungen (3), die an den Stirnseiten (10) des Blechpakets (16) Wickelköpfe (5) ausbilden, die in einer Vergussmasse, insbesondere Harz eingebettet sind, wobei das Blechpaket (16) an seinem radial äußeren Bereich zumindest eine axial verlaufende Ausnehmung (4) aufweist, über die Vergussmasse eingebracht ist und die eine in Umfangsrichtung geschlossene Kontur aufweist, wobei die Ausnehmungen (4) flach ausgeführt sind, derart, dass das Verhältnis Ausdehnung in Umfangsrichtung zu Ausdehnung in radialer Richtung größer zwei ist, wobei die Form der in der Vergussmasse eingebetteten Wickelköpfe (5) durch eine Hilfsform ausgebildet ist.

3. Blechpaket (16) nach Anspruch 1 oder 2, **dadurch gekennzeichnet, dass** jede Nut (2) zumindest eine Rinne (17) aufweist.

4. Blechpaket (16) nach zumindest einem der vorhergehenden Ansprüche, **dadurch gekennzeichnet, dass** die Ausnehmungen (4) mit der Vergussmasse ausgegossen sind.

5. Blechpaket (16) nach zumindest einem der vorhergehenden Ansprüche, **dadurch gekennzeichnet, dass** die Ausnehmungen (4) eine schalenförmige Kontur aufweisen.

6. Blechpaket (16) nach Anspruch 5, **dadurch gekennzeichnet, dass** die Kappe (19) auf der dem Luftspalt der dynamoelektrischen Maschine zugewandten Seite nur abschnittsweise oder gar nicht am Blechpaket (16) anliegt.

7. Blechpaket (16) nach Anspruch 1 oder 3 bis 5, d ad u r c h **gekennzeichnet**, dass die Kappe (19) mit ihren Enden am Blechpaket (16) anliegt.

8. Dynamoelektrische Maschine mit einem Stator (1), der ein Blechpaket (16) nach einem der Ansprüche 1 bis 7 aufweist.

9. Dynamoelektrische Maschine nach Anspruch 8, **dadurch gekennzeichnet, dass** die dynamoelektrische Maschine eine Einbauspindel ist.

10. Dynamoelektrische Maschine nach einem der Ansprüche 8 oder 9, **dadurch gekennzeichnet, dass** das Blechpaket (16) des Stators (1) in einem Gehäuse und/oder Kühlmantel (34) positioniert ist, derart, dass die Kappe (19) **oder die in Vergussmasse eingebetteten Wickelköpfe (5)** mit Gehäuse und/oder Kühlmantel (34) wärmeleitend verbunden **sind.**

11. Dynamoelektrische Maschine nach einem der Ansprüche 8 bis 10, **dadurch gekennzeichnet, dass** die Wickelköpfe (5) von einer Kappe (19) umgeben sind.

12. Dynamoelektrische Maschine nach Anspruch 8, d a**durch gekennzeichnet**, dass die dynamoelektrische Maschine kühlmantellos ist.

13. Verfahren zur Herstellung eines Blechpakets (16) eines Stators (1) mit in Nuten (2) angeordneten Wicklungen (3), die an der Stirnseite (10) Wickelköpfe (5) ausbilden, durch folgende Schritte:
- Stanzpaketieren des Blechpakets (16), wobei insbesondere am radial äußeren Rand Ausnehmungen (4) ausgestanzt werden, die in Umfangsrichtung geschlossen sind,
- Einsetzen der Wicklungen (3) in Nuten (2) des Blechpakets (16),
- Einsetzen des mit Wicklungen (3) versehenen Blechpakets (16) in eine Vorrichtung, die mit Harz über die Ausnehmungen (4) geflutet wird, soweit, bis die Wickelköpfe (5) mit Harz geflutet sind,
- wobei die Wickelköpfe (5) vor dem Vergießvorgang durch eine Hilfsform oder Kappe (19) abgedeckt sind, so dass sich die Vergussmasse in diese Hilfsform oder Kappe (19) ergießt.

## Claims

1. Laminated core (16) of a stator (1) of a dynamo-electrical machine having windings (3) which are arranged in slots (2) and form end windings (5) on the end faces (10) of the laminated core (16), which end windings (5) are embedded in an encapsulation compound, in particular resin, with the laminated core (16) having at least one axially running recess (4) via which encapsulation compound is introduced, and which has a contour which is closed in the circumferential direction, on its radially outer area, with the recesses (4) being flat, in such a way that the ratio of the extent in the circumferential direction to the extent in the radial direction is greater than two, with the end windings (5) being surrounded by a cap (19).

2. Laminated core (16) of a stator (1) of a dynamo-electrical machine having windings (3) which are arranged in slots (2) and form end windings (5) on the end faces (10) of the laminated core (16), which end windings (5) are embedded in an encapsulation compound, in particular resin, with the laminated core (16) having at least one axially running recess (4) via which encapsulation compound is introduced, and which has a contour which is closed in the circumferential direction, on its radially outer area, with the recesses (4) being flat, in such a way that the ratio of the extent in the circumferential direction to the extent in the radial direction is greater than two, with the form of the end windings (5) which are embedded in the encapsulation compound being formed by an auxiliary mould.

3. Laminated core (16) according to Claim 1 or 2, **characterized in that** each slot (2) has at least one groove (17).

4. Laminated core (16) according to at least one of the preceding claims, **characterized in that** the recesses (4) are filled with the encapsulation compound.

5. Laminated core (16) according to at least one of the preceding claims, **characterized in that** the recesses (4) have a contour in the form of a shell.

6. Laminated core (16) according to Claim 5, **characterized in that** the cap (19) on the side facing the air gap of the dynamo-electrical machine bears against the laminated core (16) only in sections or not at all.

7. Laminated core (16) according to Claim 1 or Claims 3 to 5, **characterized in that** the ends of the cap (19) bear against the laminated core (16).

8. Dynamo-electrical machine having a stator (1) which has a laminated core (16) according to one of Claims 1 to 7.

9. Dynamo-electrical machine according to Claim 8, **characterized in that** the dynamo-electrical machine is a mounting spindle.

10. Dynamo-electrical machine according to either of Claims 8 and 9, **characterized in that** the laminated core (16) of the stator (1) is positioned in a housing and/or cooling jacket (34) in such a way that the cap (19) or the end windings (5) embedded in encapsulation compound are thermally conductively connected to housing and/or cooling jacket (34).

11. Dynamo-electrical machine according to one of Claims 8 to 10, **characterized in that** the end windings (5) are surrounded by a cap (19).

12. Dynamo-electrical machine according to Claim 8, **characterized in that** the dynamo-electrical machine is without a cooling jacket.

13. Method for production of a laminated core (16) of a stator (1) having windings (3) which are arranged in slots (2) and form end windings (5) on the end face (10), **characterized by** the following steps:
- stamping-packeting of the laminated core (16), with recesses (4) being stamped out in particular on the radially outer edge and being closed in the circumferential direction,
- insertion of the windings (3) into slots (2) in the laminated core (16),
- insertion of the laminated core (16), which has been provided with windings (3), into an apparatus which is flooded with resin via the recesses (4), until the end windings (5) are flooded with resin, with the end windings (5) being covered by an auxiliary mould or cap (19) before the encapsulation process, such that the encapsulation compound flows into this auxiliary mould or cap (19).

## Revendications

1. Paquet ( 16 ) de tôles d'un stator ( 1 ) d'une machine dynamoélectrique, ayant des enroulements ( 3 ) qui sont mis dans des encoches ( 2 ) et qui forment des têtes ( 5 ) d'enroulement sur les côtés ( 10 ) autour du paquet ( 16 ) de tôles, têtes qui sont noyées dans une composition de scellement, notamment dans de la résine, le paquet ( 16 ) de tôles ayant, sur sa partie extérieure radialement, au moins un évidemment ( 4 ) s'étendant axialement, par lequel la composition de scellement est introduite et qui a un contour fermé dans la direction périphérique, les évidements ( 4 ) étant réalisés plats de manière à ce que le rapport de l'étendue dans la direction périphérique à l'étendue dans la direction radiale soit plus grand que deux, les têtes ( 5 ) d'enroulements étant entourées d'un capuchon ( 19 ).

2. Paquet ( 16 ) de tôles d'un stator ( 1 ) d'une machine dynamoélectrique, ayant des enroulements ( 3 ) qui sont mis dans des encoches ( 2 ) et qui forment des têtes ( 5 ) d'enroulement sur les côtés ( 10 ) autour du paquet ( 16 ) de tôles, têtes qui sont noyées dans une composition de scellement, notamment dans de la résine, le paquet ( 16 ) de tôles ayant, sur sa partie extérieure radialement, au moins un évidemment ( 4 ) s'étendant axialement, par lequel la composition de scellement est introduite et qui a un contour fermé dans la direction périphérique, les évidements ( 4 ) étant réalisés plats de manière à ce que le rapport de l'étendue dans la direction périphérique à l'étendue dans la direction radiale soit plus grand que deux, la forme des têtes ( 5 ) d'enroulement incorporée dans la composition de scellement étant constituée par une forme auxiliaire.

3. Paquet ( 16 ) de tôles suivant la revendication 1 ou 2, **caractérisé en ce que** chaque encoche à au moins une goulotte ( 17 ).

4. Paquet ( 16 ) de tôles suivant au moins l'une des revendications précédentes, **caractérisé en ce que** les évidements ( 4 ) sont remplis de la composition de scellement.

5. Paquet ( 16 ) de tôles suivant au moins l'une des revendications précédentes, **caractérisé en ce que** les évidements ( 4 ) ont un contour en forme de coquille.

6. Paquet ( 16 ) de tôles suivant la revendication 5, **caractérisé en ce que** le capuchon ( 9 ) ne s'applique que par endroit ou pas du tout au paquet ( 16 ) de tôles du côté tourné vers l'entrefer de la machine dynamoélectrique.

7. Paquet ( 16 ) de tôles suivant la revendication 1 ou 3 à 5, **caractérisé en ce que** le capuchon ( 19 ) s'applique, par ses extrémités, au paquet ( 16 ) de tôles.

8. Machine dynamoélectrique ayant pour stator ( 1 ) qui a un paquet ( 16 ) de tôles suivant l'une des revendications 1 à 7.

9. Machine dynamoélectrique suivant la revendication 8, **caractérisée en ce que** la machine dynamoélectrique est un arbre encastré.

10. Machine dynamoélectrique suivant l'une des revendications 8 ou 9, **caractérisée en ce que** la paquet ( 16 ) de tôles du stator ( 1 ) est mis en position dans une enveloppe et/ou dans une chemise ( 34 ) de refroidissement de manière à ce que les capuchons ( 19 ) ou les têtes ( 5 ) d'enroulement incorporées dans la composition de scellement soient reliés d'une manière conductrice de la chaleur à l'enveloppe et/ou à la chemise ( 34 ) de refroidissement.

11. Machine dynamoélectrique suivant l'une des revendications 8 ou 11, **caractérisée en ce que** les têtes ( 5 ) d'enroulement sont entourées d'un capuchon ( 19 ).

12. Machine dynamoélectrique suivant la revendication 8, **caractérisée en ce que** la machine dynamoélectrique est sans chemise de refroidissement.

13. Procédé de fabrication d'un paquet ( 16 ) de tôles d'un stator ( 1 ) ayant des enroulements ( 3 ) qui sont mis dans des encoches ( 2 ) et qui constituent des têtes ( 5 ) d'enroulement du côté ( 10 ) frontal par les stades suivants :
- mis en paquet par estampage du paquet ( 16 ) de tôles, des évidements ( 4 ) étant estampés notamment sur le bord extérieur radialement, évidements qui sont fermés dans la direction périphérique,
- insertion des enroulements ( 3 ) dans des encoches ( 2 ) du paquet ( 16 ) de tôles,
- insertion du paquet ( 16 ) de tôles pourvu des enroulements ( 3 ) dans un dispositif qui est noyé de résine par les évidements ( 4 ) jusqu'à ce que les têtes ( 5 ) d'enroulement soient noyées de résine,
- dans lequel les têtes ( 5 ) d'enroulement sont, avant l'opération de coulée, recouvertes d'une forme auxiliaire ou d'un capuchon ( 19 ) de manière à ce que la composition de scellement se déverse dans cette forme auxiliaire ou dans ce capuchon ( 19 ).
